(19) Europäisches Patentamt
European Patent Office
Office européen des brevets

(11) **EP 2 003 344 B1**

(12) **EUROPEAN PATENT SPECIFICATION**

(45) Date of publication and mention of the grant of the patent:
**02.06.2010 Bulletin 2010/22**

(51) Int Cl.:
*F04D 29/10* (2006.01)  *F04D 29/16* (2006.01)
*F16J 15/44* (2006.01)

(21) Application number: **07110167.9**

(22) Date of filing: **13.06.2007**

(54) **Seal device for a fluid machine**

Dichtungsvorrichtung für eine Fluidmaschine

Dispositif d'étanchéité pour une machine à fluide

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**17.12.2008 Bulletin 2008/51**

(73) Proprietor: **Torishima Pump Mfg. Co. Ltd.**
**Takatsuki-shi**
**Osaka 569-8660 (JP)**

(72) Inventor: **Kanemori, Yuji**
**Takatsuki-shi**
**Osaka 569-8660 (JP)**

(74) Representative: **Birken, Lars**
**Eisenführ Speiser**
**Johannes-Brahms-Platz 1**
**20355 Hamburg (DE)**

(56) References cited:
**WO-A-02/23038**      **WO-A-93/21464**
**WO-A-2004/018870**   **US-A- 4 486 024**
**US-A- 6 070 881**

**Description**

Technical Field

The present invention relates to a seal device for a fluid machine (turbo machine) such as a pump, turbine, compressor, and gas turbine. Particularly, the present invention relates to a seal device for preventing leakage of a fluid from a high pressure area to a low pressure area in a casing of the fluid machine through a gap between the casing and a rotor disposed in the casing.

Background Art

An example of a seal device installed between a casing and a rotor such as a main shaft or an impeller of a fluid machine is disclosed in Japanese Utility Model Application Laid-open Publication No. 6-018694. The seal device uses a wear-ring. Specifically, a gap is formed between an inner peripheral surface of the wear-ring fixed to the casing and an outer peripheral surface of the rotor, and a size of the gap is set to as small as possible, thereby preventing the fluid leakage from a high pressure side to a low pressure side via the gap.
WO 93/21464, which is considered as the closest prior art to the subject-matter of claim 1, discloses the features of the preamble of claim 1.
However, the conventional seal devices of this type involve following problems.
First, where the gap between rotor and the inner peripheral surface of the wear-ring is set too small for reducing the fluid leakage, assemble of the wear-ring and rotor is impratical. This is caused by size errors or assembling errors inevitably occur even if the wear-ring and rotor are machined with highly precise machining accuracy. Therefore, the gap size needs to be set to a certain level with consideration for assembling, thereby placing limitation on possible leak reduction.
Further, vibrations occur due to contact of the rotor and wear-ring during operation of the fluid machine, and these vibrations can cause seizure. The seal device disclosed in the above-mentioned Japanese Utility Model Application Laid-open Publication No. 6-018694 has a lining made from an organic material and attached to the wear-ring for preventing seizure. However, because the lining wears off due to contact of the rotor and wear-ring, long term operation of the fluid machine can cause exposure of the metal material covered by the lining which results in seizure.
Further, a fluid flow from the high pressure side to the low pressure side through the gap between the wear-ring and rotor has a high flow rate corresponding to the difference in pressure between the high pressure side and low pressure side. The fluid flowing with the high flow rate passing through the gap causes wear of the wear-ring In addition, in a vicinity of an exit at the lower pressure side of the gap, rapid pressure drop due to remarkably increased flow rate can cause cavitaion by which vibrations and wearing are occurred.

Disclosure of Invention

It is an object of the present invention to provide a seal device for preventing leakage of a fluid from a high pressure area to a low pressure area in a casing of the fluid machine through a gap between the casing and a rotor disposed in the casing, wherein the device can minimize the amount of leakage, reduce vibrations, prevent seizure, and inhibit wear and cavitation with achieving relatively simple structure and easy manufacturing and maintenance.
Thus, the present invention provides a seal device according to claim 1.
Because the thin auxiliary ring is provided as a separate element from the main ring, the diameter of the auxiliary through bore formed in the thin auxiliary ring can be set much less than the diameter of the main through bore formed in the main ring so as to set the second gap much narrower than the first gap. As a result, the amount of fluid leaking from the high pressure area to the low pressure area through the first and second gaps can be minimized. Such reduction in the amount of fluid leakage can decrease leakage losses, thereby increasing an efficiency of the fluid machine.
The thin auxiliary ring is provided as the separate element from the main ring, and the gap (second gap) between the inner peripheral wall of the auxiliary through bore formed in the thin auxiliary ring and the outer peripheral surface of the rotor is set less than the gap (first gap) between the inner peripheral wall of the main through bore formed in the main ring and the outer peripheral surface of the rotor. As a result, the rotor and the main ring (inner peripheral wall of the main through bore) are not in contact with one another, thereby preventing the vibration due to contact of the rotor with the main ring and preventing the seizure between the rotor and the main ring.
The first gap at the main ring side is located on the low pressure area side with respect to the second gap at the thin auxiliary ring side, and the first gap is wider than the second gap. Therefore, the flow rate of fluid flowing through the first gap from the high pressure area side to the low pressure area side can be reduced and, thereby preventing wear of the main ring (wear of the inner peripheral wall of the main through bore). Further, because the flow rate of the fluid flowing in the vicinity of the exit of the first gap on the side of the low pressure area is reduced, the rapid pressure drop in this portion does not occur, thereby preventing the cavitation.

Both the main ring and the thin auxiliary ring have single-piece structures constituted by a single component rather than structures obtained by assembling a plurality of components, and the thin auxiliary ring can be easily assembled to the main ring by merely bending the thin auxiliary ring to be fitted in the annular accommodation groove of the main ring. Therefore, the seal device according to the present invention can be easily manufactured. Further, if necessary, the thin auxiliary ring can be removed from the main ring by bending the thin auxiliary ring and to be pulled out from the annular accommodation groove of the main ring, and then a new thin auxiliary ring for replacement can be assembled to the main ring by bending the new thin auxiliary ring to be fitted into the annular accommodation groove of the main ring. Accordingly, the seal device according to the present invention can be easily maintained.

Brief Description of Drawings

These and other objects and features of the invention will become apparent from the following description taken in conjunction with preferred embodiments of the invention with reference to the accompanying drawings, in which:

Fig. 1 is a cross sectional illustrating a centrifugal pump comprising a seal device of an embodiment of the present invention;
Fig. 2 is a partially enlarged view of a portion II in Fig. 1;
Fig. 3 is an exploded perspective view illustrating a wear-ring and a floating ring;
Fig. 4A is a partially enlarged view illustrating an example of roulette processing of the wear-ring;
Fig. 4B is a partially enlarged view illustrating another example of roulette processing of the wear-ring;
Fig. 5 is a partially enlarged view of the wear-ring viewed from an arrow V in Fig. 3;
Fig. 6 is a partially enlarged view of a seal device at a mouth ring portion (in a state where the floating ring is pressed against the wear-ring);
Fig. 7 is a partially enlarged view of the seal device at the mouth ring portion (in a state where the outer circumference of floating ring abuts against the wear-ring);
Fig. 8 is a partially enlarged cross sectional view illustrating an alternative of the a seal device at the mouth ring portion;
Fig. 9 is an enlarged view of periphery of an inter bush; and
Fig. 10 is an enlarged view of a portion X in Fig. 9.

Best Mode for Carrying Out the Invention

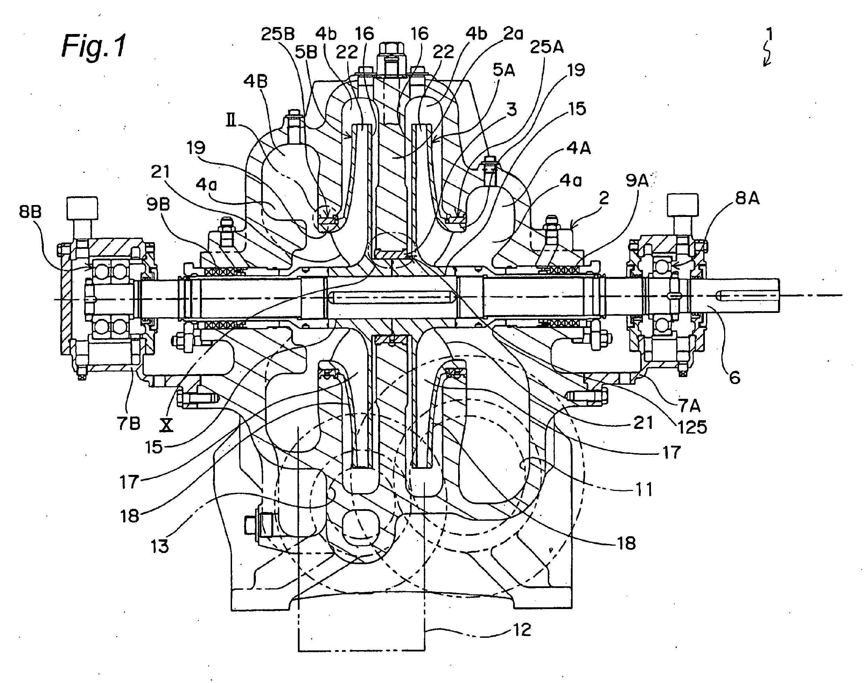

Fig. 1 shows a two-stage centrifugal pump 1 comprising seal devices according to embodiments of the present invention. First stage and second stage volute sections 4A, 4B are formed inside a casing 2 of the centrifugal pump 1. Positioned between the first stage volute section 4A and the second stage volute section 4B is a partition portion 2a of the casing 2, to which an inter bush 3 is fixed as described later in detail. A first stage impeller 5A and a second stage impeller 5B are respectively disposed, with a left-right symmetry, in the volute sections 4A, 4B. These impellers 5A, 5B are fixed to a main shaft (rotary shaft) 6 extending in the horizontal direction. The main shaft 6 extends through the casing 2. A pair of bearing brackets 7A, 7B are fixed to the casing 2, and both ends of the main shaft 6 are rotatably supported by bearings 8A, 8B accommodated in these bearing brackets 7A, 7B. Further, a pair of gland packing 9A, 9B for sealing is respectively installed in portions where the main shaft 6 passes through the casing 2. The right end of the main shaft 6 in this figure is connected to a motor (not shown).

When the main shaft 6 is rotated by the motor, the impellers 5A, 5B rotate inside the volute sections 4A, 4B. Water that flows into the volute section 4A from an intake port 11 is pressurized by the first stage impeller 5A, and then flows into the volute section 4B via a flow channel 12 shown schematically in the figure. The water that has flown into the volute section 4B is further pressurized by the second stage impeller 5B, and then discharged from a discharge port 13.

The impellers 5A, 5B is provided with a boss portion 15 fixed to the main shaft 6, and a main plate 16 of a circular disc configuration extending from the boss portion 15 in a radial direction of the main shaft 6. Proximal end sides of a plurality of vanes 17 are fixed to the main plate 16. Further, the distal end sides of the vanes 17 are joined by a side plate 18 having a round outer circumference. The side plate 18 has, a the center thereof, a mouth ring portion 19 of a cylindrical shape open at both ends and protrudes in a direction away from the main plate 16. The opening surrounded by the mouth ring portion 19 constitutes an impeller entrance 21. Further, a portion defined between the outer circumference of the main plate 16 and side plate 18 constitutes an impeller exit 22. The main plate 16 and side plate 18 are disposed coaxially with the main shaft 6. Therefore, an axial line "L" of the main shaft 6 is also a rotation center of the main plate 16 and side plate 18. The water in the volute sections 4A, 4B is sucked in from the impeller entrance 21 to the rotating impellers 5A, 5B to be pressurized by the vanes 17, and then discharged from the impeller exit 22. Therefore, with respect to each of the volute sections 4A, 4B, an area including the impeller entrance 21 is a low pressure area 4a, and an area including the impeller exit 22 is a high-pressure area 4b.

The seal devices 25A, 25B prevent water in the volute sections 4A, 4B from leaking from the high pressure area 4b to the low pressure area 4a. Specifically, the seal devices 25A, 25B prevent water in the high pressure areas 4b in the volute sections 4A, 4B form leaking into the low pressure areas 4a by passing through a gap between the casing 2 and the outer peripheral surface of the mouth ring portion 19 of the impeller 5 The seal device 25A installed in the first stage volute section 4A and the seal device 25B installed in the second- stage volute section 4B have the same structure and the same functions, and differ only in attachment postures in the left-right direction in the figure. Thus, the seal device 25B installed in the second stage volute section 4B will be described below in detail.

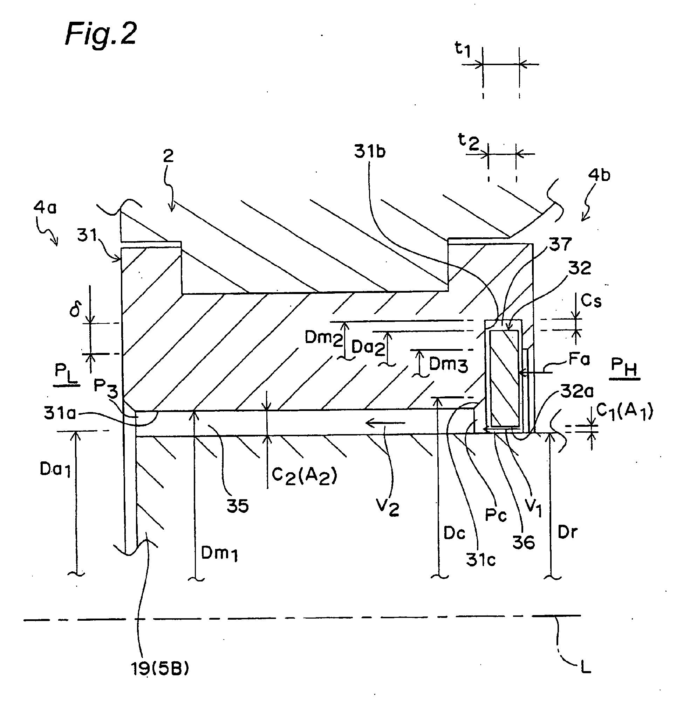

Further referring to Figs. 2, 3, and 5, the seal device 25B has a wear-ring (main ring) 31 fixed to the outer circumference to the casing by means of screws, and a floating ring (thin auxiliary ring) 32 attached to the wear-ring so that it can move to a certain extent with respect to the wear-ring 31 both in directions perpendicular to the axial line L of the main shaft 6 and along the axial line L. The wear-ring 31 is composed of a material having rigidity, i.e. rigid material, such as stainless steel, cast iron, or bronze casting, and has an integrated or a single-piece structure composed of a single component, rather than a structure obtained by assembling a plurality of parts. On the other hand, the floating ring 32 is composed of a material that excels in sliding performance and resistance to wear, and also has a certain elastic deformation ability (deformable material). For example, synthetic resins, e.g., a fluorine resin such as polytetrafluoroethylene (PTFE), a polyamide resin such as polyether ether ketone (PEEK), hard rubbers, soft metals, and leather can be used as the material for the floating ring 32. Similarly to the wear-ring 31, the floating ring 32 has an integrated structure composed of a single component, rather than a structure obtained by assembling a plurality of parts.

The wear-ring 31 generally has a thin annular shape and is formed therein with a through bore 31a (main through bore) of a round cross section. The through bore 31a passes from one end surface on the side of the low-pressure area 4a (end surface on the left side in the figure) to the other end surface on the side of the high-pressure area 4b (end surface on the right side in the figure). The mouth ring portion 19 of the impeller 5B is inserted into the through bore 31a from the side of the high-pressure area 4b. Further, an annular accommodation groove 31b is formed at a portion of the inner peripheral wall of the through bore 31 on a side of the high pressure area 4b, more specifically, in the portion of the inner peripheral wall of the through bore 31a close to the end surface of the wear-ring 31 on the side of the high-pressure area 4b, and the floating ring 32 is accommodated in the annular accommodation groove 31b. A chamfer portion (enlarged portion) 31c in which a diameter of the through bore 31a increases gradually from the side of the low pressure area 4a to the side of the high pressure area 4b is formed in a portion facing the end surface of the floating ring 32 of the through bore 31a on the side of the low pressure area 47a, that is, in the connection portion of the hole circumferential wall of the through bore 31a and one side wall of a pair of side walls of the annular accommodation groove 31b that is located on the side of the low-pressure area 4b. As shown by a reference symbol "$\delta$", the amount of protrusion of the side wall on the side of the high-pressure area 4a of the annular accommodation groove 31b from the bottom wall of the annular accommodation groove 31b is set to a minimum limit amount necessary to prevent the floating ring 32 from falling out from the annular accommodation groove 31b.

The floating ring 32 has an annular shape and is much thinner than the wear-ring 31. Specifically, the thickness of floating ring 32 is 1/32 to 1/4 of the thickness of wear-ring 31. The thickness of the floating ring 32 is set such that a force where the mouth ring portion 19 rotates the wear-ring 31 together is smaller than a pushing force $F_a$ described bellow. Formed in the floating ring 32 is a through bore (auxiliary through bore) 32a of a round cross section that passes from one end surface on the side of the low pressure area 4a (end surface on the left side in the figure) to the other end surface on the side of the high pressure area 4b (end surface on the right side in the figure) is formed in the floating ring 32. The mouth ring portion 19 of the impeller 5B passes into the through bore 32a from the side of the high pressure area 4b. The floating ring 32 is engaged into the annular accommodation groove 31b from the end surface of the wear-ring 31 on the side of the high pressure area 4b by bending the floating ring.

Dimensions of the wear-ring 31 and floating ring 32 are described in detail below. In the description of these dimensions, the through bore 31a, through bore 32a, and mouth ring portion 19 are assumed to be coaxial.

A diameter $D_{m1}$ of the through bore 31a of the wear-ring 31 is set larger than a diameter (outer diameter) $D_r$ of the mouth ring portion 19 of the impeller 5B. Therefore, an annular gap (first gap) 35 having a width $C_2$ corresponding to the difference between the diameter $D_{m1}$ and diameter $D_r$ is formed between the inner peripheral wall of the through bore 31a and the outer peripheral surface of the mouth ring portion 19. Further, an end portion of the chamfer portion 31c on the side of the high pressure area 4b has a diameter $D_c$ larger than the diameter $D_{m1}$ of the through bore 31a. Furthermore, because as the protrusion amount $\delta$ of the side wall of annular accommodation groove 31b on the side of the high pressure area 4b is set to a minimum described above, the opening of the through bore 31a in the end surface of the wear-ring 31 on the side of the high pressure area 4b has a diameter $D_{m3}$ much larger than the diameters $D_{m1}$, $D_c$ of other portions (including the chamfer portion 31c) of the through bore 31a.

A diameter $D_{a1}$ of the through bore 32a of the floating ring 32 is set larger than the diameter $D_r$ of the mouth ring portion 19 of the impeller 5B. Therefore, an annular gap (second gap) 36 having a width $C_1$ corresponding to the difference between the diameter $D_{a1}$ and the diameter $D_r$ is formed between the inner peripheral wall of the through bore 32a and the outer peripheral surface of the mouth ring portion 19. The diameter $D_{a1}$ of the through bore 32a is set smaller than the diameter $D_{m1}$ of the through bore 31 a. Therefore, the width $C_1$ of the gap 36 is less than the width $C_2$ of the gap 35.

An outer diameter (diameter) $D_{a2}$ of the floating ring 32 is set smaller than a diameter $D_{m2}$ of the bottom wall of the annular accommodation groove 31b formed in the wear-ring 31. Therefore, an annular gap (third gap) 37 having a width $C_s$ (sufficiently larger than the width $C_1$ of the gap 36) is formed between the bottom wall of the annular accommodation groove 31 b and the outer periphery of the floating ring 32. Therefore, the floating ring 32 can move in the direction perpendicular to the axial line L (radial direction of the floating ring 32 itself) through the distance corresponding to the width $C_s$ of the gap 37 at maximum. The width $C_2$ of the gap 35 is set larger than the sum of the width $C_1$ of the gap 36 and the width $C_s$ of the gap 37. In other words, the widths $C_1$, $C_2$, $C_s$ satisfy the relationship represented by a formula (1) below.

$$C_2 > C_1 + C_s \qquad (1)$$

A distance $t_1$ between the pair of opposing side walls of the annular accommodation groove 31b is set larger than a thickness $t_2$ of the floating ring 32. Therefore, the floating ring 32 can move in the direction of axial line L (thickness direction of the floating ring 32 itself) through a distance corresponding to the difference between the distance $t_1$ and the thickness $t_2$.

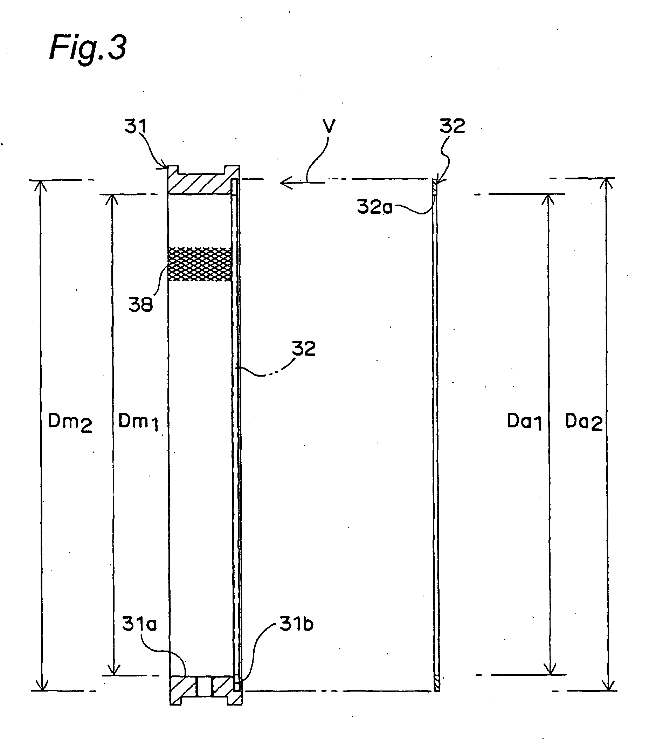

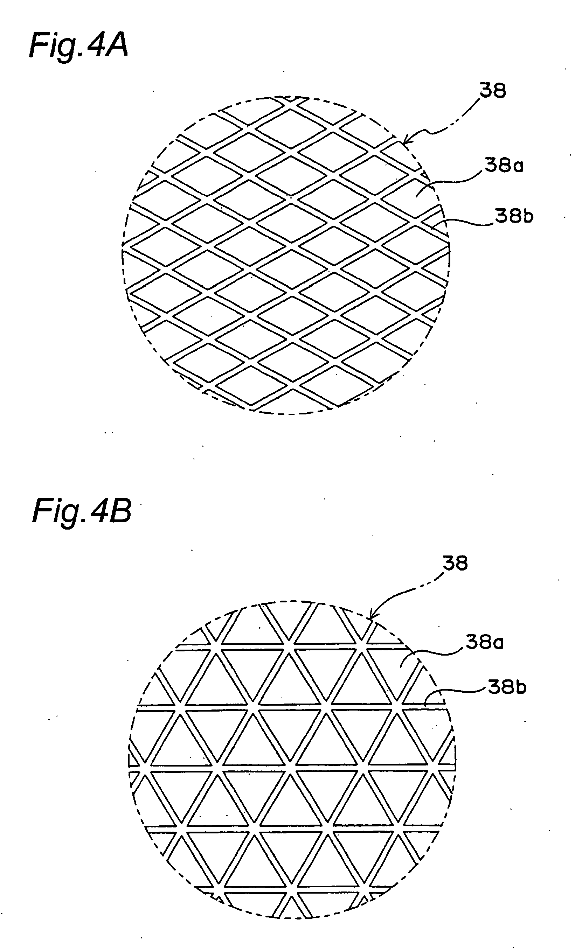

Referring to Fig. 3, a portion of the inner peripheral wall of the through bore 31a, more specifically a portion of the inner peripheral wall of through bore 31a closer to the low pressure area 4a than the chamfer portion 31c, is subjected to roulette processing 38 to increase surface roughness so as to increase fluid friction resistance acting upon water that passes through the gap 35. In Fig. 3, in order to simplify the drawing, the roulette processing 38 is shown to be performed only on part of the circumference of the inner peripheral wall of the through bore 31a, but actually the roulette processing 38 is performed on the entire circumference of the inner peripheral wall of the through bore 31a. The roulette processing 38 may be performed so that linear protrusions 38b surround tetragonal concave portions 38a as shown in Fig. 4A, or so that linear convex portions surround triangular concave portions 38a as shown in Fig. 4B. Further, surface roughness of the hole circumferential wall of the through bore 31a may be increased by performing processing other than the roulette processing 38, provided that fluid friction resistance acting upon water that passes through the gap 35 can be sufficiently increased.

Operation of the centrifugal pump 1 in which the seal device 25B demonstrates seal functions will be explained below.

Because the floating ring 32 can move to a certain extent in the radial direction as described above, the floating ring moves autonomously to a position determined by hydrostatic balance with respect the rotating mouth ring portion 19 and retains this position. In the balance position, the gap 36 of almost uniform width $C_1$ over the entire circumference is formed between the inner peripheral wall of through bore 32a of floating ring 32 and the outer peripheral surface of the mouth ring portion 19.

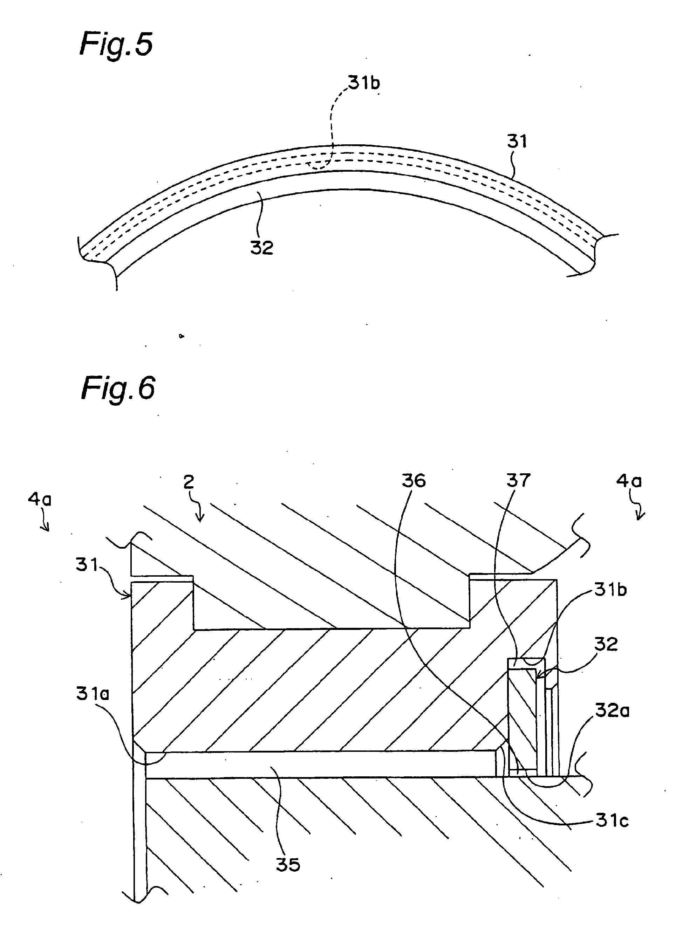

As described above, the floating ring 32 can move also in the thickness direction and is pushed from the high pressure area 4b to the low pressure area 4a by a pushing force $F_a$ generated by the difference between the pressures acing on the end surfaces of the floating ring on the sides of high pressure area 4b and low-pressure area 4a. As a result, as shown in Fig. 6, the floating ring 32 is pressed against one side wall (side wall on the left side in the figure) of the annular accommodation groove 31b. The pushing force $F_a$ is represented by a formula (2) below.

$$F_a = (P_H - P_c) \times \pi/4 \times (D_a{}^2 - D_c{}^2) \qquad (2)$$

In the formula (2), $P_H$ represents a pressure of the high pressure area 4b and $P_C$ represents a pressure at the chamfer portion 31c.

As clearly understood by referring to the formula (2), the pushing force $F_a$ can be adjusted by changing the pressure $P_c$ at the chamfer portion 31c. Further, the pressure at the chamfer portion 31c can be adjusted by changing the diameter $D_c$ of the right end portion of the chamfer portion 31c in this figure (ratio of diameter increase from the side of low pressure area 4a to the side of high pressure area 4b). Therefore, the pushing force $F_a$ can be easily adjusted by changing the dimensions and shape of the chamfer portion 31c.

Water leakage from the high pressure area 4b to the low pressure area 4a is caused due to a difference between the pressure $P_H$ of high pressure area 4b and the pressure $P_L$ of low pressure area 4a. The leaking water first flows from the high pressure area 4b into the gap 36 between the through bore 32a of the floating ring 32 and the mouth ring portion 19, and then flows from the chamfer portion 31c into the low pressure area 4a via the gap 35 between the through bore 31a of the wear-ring 31 and the mouth ring portion 19. The seal device 25B is provided with the floating ring 32 as a separate element from the wear-ring 31, the diameter $D_{a1}$ of the through bore formed in the floating ring 32 is set smaller than the diameter $D_{m1}$ of the through bore 31 a formed in the wear-ring 31, and the gap 36 is set narrower than the gap 35 (widths $C_1$, $C_2$). As a result, the amount of fluid leaking from the high pressure area 4b to the low pressure area 4a via the gap 36 and gap 35 can be remarkably reduced. Such reduction in the amount of leakage makes can decrease the leakage loss, thereby increasing the efficiency of centrifugal pump 1. Further, because the fluid friction resistance acting upon water flowing through the gap 35 is increased by performing roulette processing 38 on the inner peripheral wall of the through bore 31a, the amount of water leaking from the high pressure area 4b into the low pressure area 4a can be further decreased. As a result, the leakage loss is further reduced and the efficiency is further increased.

Because the width $C_2$ of the gap 35 of mouth ring 31 positioned on the side of low pressure area 4a is larger than the width $C_1$ of the gap 36 of floating ring 32 positioned on the side of high-pressure area 4b, the flow rate of water flowing through the gap 35 is reduced. This reduction in flow rate is described in detail. Because a flow rate V of a fluid is generally obtained by dividing a volume flow rate Q per unit time by a cross section area A (V = Q/A), the relationship between a flow rate $V_1$ in the gap 36 and a flow rate $V_2$ in the gap 35 can be represented by a formula (3) below.

$$V_2 = V_1 \times A_1/A_2 \qquad\qquad (3)$$

In the formula (3), $A_1$ represents a cross section area of the gap 36, and $A_2$ represents a cross section area of the gap 35. Because the width $C_1$ of the gap 36 is less than the width $C_2$ of the gap 35 as described above and the cross section area $A_1$ is less than the cross section area $A_2$, the flow rate $V_2$ in the gap 35 is smaller than the flow rate $V_1$ in the gap 36. The reduced flow rate $V_1$ in the gap 35 can prevent the inner peripheral wall of the through bore 31a of mouth ring 31 from wear. The amount of wear is generally proportional to the fifth power of flow velocity. Therefore, the wear of the wear-ring 31 can be effectively prevented by reducing the flow rate $V_1$. Further, because the flow rate of water in the vicinity of outlet of the port 35 on the side of low pressure area is reduced, no rapid drop in pressure occurs in this portion, resulting in that the occurrence of cavitation can be prevented.

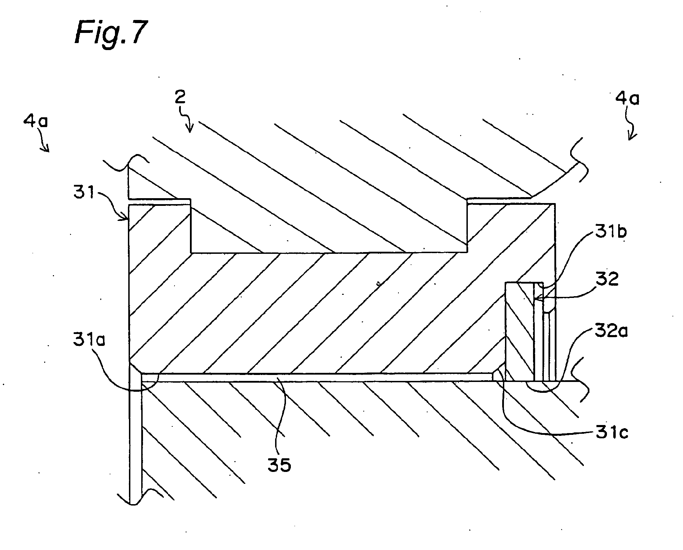

Because the width $C_1$ of the gap 36 of floating ring 32 is set narrower than the width $C_2$ of the gap 35 of wear-ring 31, the mouth ring portion 19 comes into contact with the floating ring 32 before coming into contact with the wear-ring 31. However, because the floating ring 32 can move in the radial direction through the distance corresponding to the width $C_s$ of the gap 37 at maximum, the damage or wear of the floating ring 32 caused by this radial direction movement can be reduced. On the other hand, because the width $C_2$ of the gap 35 is set larger than the sum of the width $C_1$ of the gap 36 and the width $C_s$ of the gap 37, even if the floating ring 32 pushed by the mouth ring portion 19 moves in the radial direction, the outer circumference of the floating ring 32 comes into contact with the bottom wall of the annular accommodation groove 31b before the mouth ring portion 19 hits the inner peripheral wall of the through bore 31a of wear-ring 31 as shown in Fig. 7. Therefore, the occurrence of vibrations caused by impacts of the mouth ring portion 19 and wear-ring 31 and seizure of the mouth ring portion 19 and wear-ring 31 can be reliably prevented.

Because the floating ring 32 is pressed against the side wall of the annular accommodation groove 31b by the pushing force $F_a$ caused by the difference in pressure between the high-pressure area 4b and low-pressure area 4a, when the mouth ring portion 19 comes into contact with the floating ring 32, a friction force $F_v$ proportional to the pushing force $F_a$ ($F_v = \mu \times F_a$ where "$\mu$" is a friction coefficient) is generated between the floating ring 32 and the wear-ring 31. The friction force $F_v$ acts as a resistance to the radial movement of the floating ring 32. As a result, the floating ring 32 functions as a damping friction force to vibrations of the mouth ring portion 19 and reduces the vibrations of the mouth ring portion 19. Furthermore, This friction force $F_v$ can prevent a phenomenon where mouth ring portion rotates together the floating ring 32. Because the pushing force $F_a$ can be adjusted by changing the dimensions and shape of the chamfer portion 31c, as described above, the friction force $F_v$ also can be easily adjusted by the dimensions and shape of the chamfer portion 31c. The friction force $F_v$ is set so as to be larger than the force where the mouth ring portion 19 rotates the wear-ring 31 together.

Both the wear-ring 31 and the floating ring 32 have single-piece structures constituted by a single component, rather than structures obtained by assembling a plurality of components, and the floating ring 32 can be incorporated in the wear-ring 31 by bending the floating ring 32 and fitting in the annular accommodation groove 31b of the wear-ring 31. Therefore, the seal device 25B can be easily manufactured. Furthermore, if necessary, the floating ring 32 can be removed from the wear-ring 31 by merely bending the floating ring and pulling it out from the annular accommodation groove 31b of the wear-ring 31, and a new floating ring 32 for replacement can be mounted on the wear-ring 31 by bending the floating ring and fitting into the annular accommodation groove 31b of the wear-ring 31. Accordingly, the seal device 25B can be easily maintained.

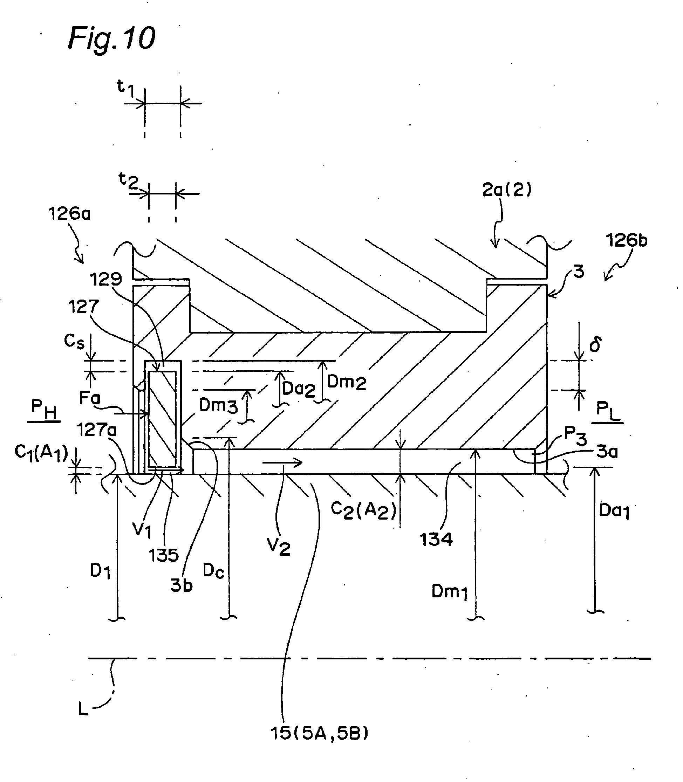

Referring to Figs. 1, 9, and 10, a seal device 125 similar to the seal devices 25A, 25B is provided in a portion where the boss portions 15 of the impellers 5A, 5B pass through the partition portion 2a of the casing 2. An outer circumference of the inter bush 3 is fixed to the partition portion 2a as described above. The boss portions 15 of the impellers 5A, 5B fixed to the main shaft 6 pass through the inter bush 3 and the partition portion 2a and extend into the first-stage and second-stage volute sections 4A, 4B.

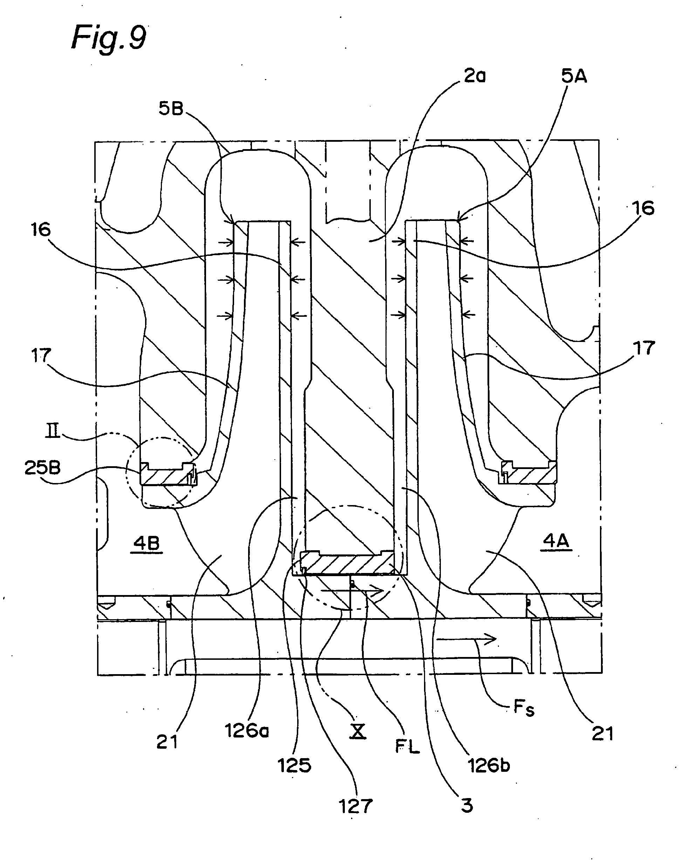

The seal device 125 prevents the fluid leakage from an area in the second stage volute section 4B occupying the impeller exit 22 side of the second stage impeller 5B and a rear surface side of the main plate 16 of the impeller 5B to an area in the first stage volute section 4A occupying the impeller exit side of the first stage impeller 5A and a rear surface side of the main plate 16 of the impeller 5A (an arrow "FL" in Fig. 9). In other words, the former area is a high pressure area 126a, and the latter area is a low pressure area 126b. The high pressure area 126a and low-pressure area 126b are partitioned by the boss portion 15 and partition wall portion 2a. The fluid leakage from the high pressure area 126a into the low pressure area 126b disrupts the balance of pressures acting upon the front and rear surfaces of the first and second stage impellers 5A, 5B. As a result, an undesirable thrust load is applied to the main shaft 6 to which the impellers 5A, 5B are fixed as shown by an arrow "Fs" in Fig. 9.

The seal device 125 is provided with an inter bush 3 as an element equivalent to the wear-ring 31 in the seal devices 25A, 25B and a floating ring 127 that is attached to the inter bush 3.

The inter bush 3 has generally round annular shape and is formed a through bore (main through bore) 3a of a round cross section therein. This through bore 3a extends from one end surface of the inter bush 3 on the side of the low pressure area 126b (end surface on the right side in Fig. 9) to the other end surface of the inter bush 3 on the side of the high pressure area 126b (end surface on the left side in the figure). The boss portions 15 of the impellers 5A, 5B are inserted into the through bore 3a. An annular gap 134 is formed between the inner peripheral wall of the through bore 3a and the outer peripheral surface of the boss portion 15. Further, an annular accommodation groove 129 is formed in a portion on the side of the high pressure area 126a of the inner peripheral wall of the through bore 3a. The floating ring 127 is accommodated in the annular accommodation groove 129. Further, a chamfer portion 3b is formed in a portion of the through bore 129 that faces an end surface of the floating ring 127 on the side of the low pressure area 126b.

A through bore (auxiliary through bore) 127a having a round cross section is formed in the floating ring 127. The through bore 127a passes from the end surface of the floating ring on the side of the low pressure area 126b to the end surface on the side of the high pressure area 126a. The boss portion 15 passes through the through bore 127a. An annular gap 135 is formed between the inner peripheral wall of the through bore 131 and the outer peripheral surface of the boss portion 15. An annular groove 133 is formed between a bottom wall of the annular accommodation groove 129 and the outer circumference of the floating ring 127.

The structure and functions of the seal device 125 are identical to those of the seal devices 25A, 25B. Elements and dimensions in Fig. 9 identical to those in Fig. 2 are assigned with identical reference symbols.

The seal device of a fluid mechanism in accordance with the present invention has a relatively simple structure can minimize the amount of leakage, reduce vibrations, prevent seizure, and inhabit wear and cavitation with achieving relatively simple structure and easy manufacturing and maintenance.

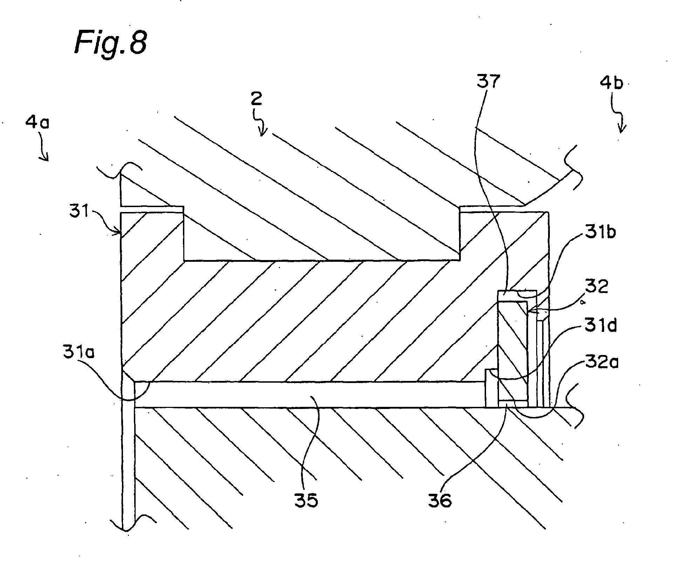

The present invention is not limited to the embodiments, and various modifications thereof are possible. For example, the present invention can be applied to pumps other than centrifugal pumps, as well as fluid machines other than pumps such as compressors and gas turbines. Further, a plurality of floating rings may be provided. Furthermore, as shown in Fig. 8, a step 31d may be provided in the portion where the through bore 31a is connected to the annular accommodation groove 31b instead of the chamfer portion 31c.

Although the present invention has been fully described in conjunction with preferred embodiments thereof with reference to the accompanying drawings, various changes and modifications are possible for those skilled in the art. Therefore, such changes and modifications should be construed as included in the present invention unless they depart from the intention and scope of the invention as defined by the appended claims.

**Claims**

1. A seal device (25A, 25B, 125) for a fluid machine (1) for preventing leakage of a fluid from a high pressure (4b, 128a) to a low pressure area (4a, 126b) in a casing (2) of the fluid machine through a gap (35, 36; 134, 135) between the casing and a rotor (19, 15) accommodated in the casing, **characterised in that** the seal device comprises:

   a main ring (31, 3) having a single-piece structure, fixed to a portion of the casing corresponding to a boundary between the high pressure area and the low pressure area, being formed therein with a main through bore (31 a, 3a) which extends between the high pressure area and the low pressure area and into which the rotor is inserted so as to define a first gap (35, 134) between an inner peripheral wall of the main through bore and an outer peripheral surface of the rotor, and
   a thin auxiliary ring (32, 127) having an outer circumferential portion accommodated in an annular accommodation groove (31 b, 129) formed at a portion of the inner peripheral wall of the main through bore at a high pressure area side, being formed therein with an auxiliary through bore (32a, 127a) of a smaller outer diameter than that of the main through bore which extends between the high pressure area and the low pressure area and into which the rotor is inserted so as to define a second gap (36, 135) narrower than the first gap between an inner peripheral wall of the auxiliary through bore and the outer peripheral surface of the rotor, wherein an opening of the main through bore in an end surface of the main ring on a side of the high pressure area has a diameter ($D_{m3}$) larger than the diameters of other portions of the main through bore.

2. The seal device according to claim 1, **characterised in that** a third gap (37, 133) is defined between a bottom wall of the annular accommodation groove and the outer circumference of the thin auxiliary ring, and that a sum of sizes of the second and third gaps is smaller than a size of the first gap. '

3. The seal device according to claim 2, **characterised in that** a distance (t1) between a pair of side walls of the annular accommodation groove is larger than a thickness (t2) of the thin auxiliary ring.

4. The seal device according to claim 3, **characterised in that** the inner bore wall of the main through bore is provided with an enlarged portion (31c) at a portion facing a surface of the thin auxiliary ring of the low pressure area side, the enlarged portion having a diameter increasing from the low pressure area side to the high pressure area side.

5. The seal device according to claim 4, **characterised in that** the inner peripheral wall of the main through bore is subjected to processing for increasing surface roughness.

6. The seal device according to claim 5, **characterised in that** the thickness of the thin auxiliary ring is set in a range between 1/32 and 1/4 of a thickness of the main ring.

7. The seal device according to claim 6, **characterised in that** the main ring is made of a rigid material and the thin auxiliary ring is made of deformable material.

8. The seal device according to claim 7, **characterised in that** the rigid material is any one of stainless-steel, cast iron, and cast bronze, and wherein the deformable material is any one of resin, hard rubber, light metal, and leather.

9. The seal device according to claim 7, **characterised in that** the fluid machine is a centrifugal pump (1) comprising the casing within which a volute section (4A, 4B) is formed and an impeller (5A, 5B) accommodated in the volute section, that the rotor is a mouth ring portion (19) of the impeller, that the high pressure area is one area of the volute section in which an entrance (21) of the impeller is located, the low pressure area is other area of the volute section in which an exit (22) of the impeller is located, and the high pressure area and the low pressure area are separated with each other by the mouth ring portion and a portion of the casing opposite to the mouth ring, that the main ring is a wear-ring having an outer circumference fixed to the portion of the casing opposite to the mouth ring and being opposed to an outer peripheral surface of the mouth ring with the first gap, and that the thin auxiliary ring (32) is opposed to the outer peripheral surface of the mouth ring with the second gap.

10. The seal device according to claim 7, **characterised in that** the fluid machine is a multistage centrifugal pump comprising the casing within which first and second stage volute sections (4A, 4B) are formed and first and second stage impellers (5A, 5B) accommodated respectively in the first and second stage volute sections, that the rotor is constituted by boss portions (15) of the first and second stage impellers, that the high pressure area is an area of the second stage volute section occupying an exit (21) side of the second stage impeller and a rear surface side of a main plate (16) of the second stage impeller, the low pressure area is an area of the first stage volute section occupying an exit (21) side of the first stage impeller and a rear surface side of a main plate (16) of the first stage impeller, and the high pressure area and low pressure area are partitioned with each other by a partition wall portion (2a) of the casing between the first and second stage volute sections and the boss portions, that the main ring is a bush (3) having an outer circumference fixed to the partition wall and being opposed to an outer peripheral surface of the boss portions with the first gap, and that the thin auxiliary is opposed to the outer peripheral surface of the boss portions with the second gap.

**EP 2 003 344 B1**

**Patentansprüche**

1. Dichtungsvorrichtung (25A, 25B, 125) für eine Fluidmaschine (1) zur Vermeidung des Austretens eines Fluids aus einem Hochdruckbereich (4b, 126a) in einen Niederdruckbereich (4a, 126b) in einem Gehäuse (2) der Fluidmaschine (1) durch einen Spalt (35, 36; 134, 135) zwischen dem Gehäuse (2) und einem Rotor (19, 15), welcher in dem Gehäuse (2) angeordnet ist, **dadurch gekennzeichnet, dass** die Dichtungsvorrichtung (25A, 25B. 125) umfasst:

   einen Hauptring (31, 3) mit einer Einzelteilstruktur, welcher an einem Abschnitt des Gehäuses (2) befestigt ist, der einer Grenzschicht zwischen dem Hochdruckbereich (4b, 126a) und dem Niederdruckbereich (4a, 126b) entspricht, wobei der Hauptring (31, 3) darin mit einer Hauptdurchbohrung (31a, 3a) geformt ist, welche sich zwischen dem Hochdruckbereich (4b, 126a) und dem Niederdruckbereich (4a, 126b) erstreckt, und in welche der Rotor (19, 15) so eingesetzt wird, dass ein erster Spalt (35, 134) zwischen einer inneren Randfläche der Hauptdurchbohrung (31a, 3a) und einer äußeren Randfläche des Rotors (19, 15) definiert wird; und
   ein dünner Zusatzring (32, 127) mit einem äußerer Umfangsabschnitt, welcher in einer ringförmigen Aufnahmenut (31 b, 129) angeordnet ist, die an einem Abschnitt der inneren Randfläche der Hauptdurchbohrung (31a, 3a) auf einer Seite des Hochdruckbereichs (4b, 126a) gebildet wird, wobei der dünne Zusatzring darin mit einer zusätzlichen Durchbohrung (32a, 127a) geformt ist, deren äußerer Durchmesser kleiner als der der Hauptdurchbohrung (31a, 3a) ist, wobei sich die zusätzliche Durchbohrung (32a, 127a) zwischen dem Hochdruckbereich (4b, 126a) und dem Niederdruckbereich (4a, 126b) erstreckt, und wobei der Rotor (19, 15) so in die zusätzliche Durchbohrung (32a, 127a) eingesetzt wird, dass ein zweiter Spalt (36, 135) zwischen einer inneren Randfläche der zusätzlichen Durchbohrung und einer äußeren Randfläche des Rotors (19, 15) definiert wird, wobei der zweite Spalt (36, 135) enger als der erste Spalt (35, 134) ist, wobei eine Öffnung der Hauptdurchbohrung (31a, 3a) in einer Endfläche des Hauptrings (31, 3) auf einer Seite des Hochdruckbereichs (4b, 126a) einen Durchmesser ($D_{m3}$) hat, der größer als die Durchmesser von anderen Abschnitten der Hauptdurchbohrung (31a, 3a) ist.

2. Dichtungsvorrichtung (25A, 25B, 125) nach Anspruch 1, **dadurch gekennzeichnet, dass** ein dritter Spalt (37, 133) zwischen einer unteren Wand der ringförmigen Aufnahmenut (31 b, 129) und dem äußeren Umfang des dünnen Zusatzrings (32, 127) definiert wird, und
   dass eine Summe von Größen der zweiten und dritten Spalte (36, 135, 37, 133) kleiner ist als eine Größe des ersten Spalts (35, 134).

3. Dichtungsvorrichtung (25A, 25B, 125) nach Anspruch 2, **dadurch gekennzeichnet, dass** ein Abstand (t1) zwischen einem Paar von Seitenwänden der ringförmigen Aufnahmenut (31b, 129) größer ist als eine Dicke (t2) des dünnen Zusatzrings (32, 127).

4. Dichtungsvorrichtung (25A, 25B, 125) nach Anspruch 3, **dadurch gekennzeichnet, dass** die innere Bohrungswand der Hauptdurchbohrung (31a, 3a) mit einem vergrößerten Abschnitt (31c) ausgestattet ist an einem Abschnitt, der einer Oberfläche des dünnen Zusatzrings (32, 127) gegenüber liegt auf der Seite des Niederdruckbereichs (4a, 126b), wobei der vergrößerte Abschnitt (31 c) einen Durchmesser hat, der sich von der Seite des Niederdruckbereichs (4a, 126b) zur Seite des Hochdruckbereichs (4b, 126a) vergrößert.

5. Dichtungsvorrichtung (25A, 258, 125) nach Anspruch 4, **dadurch gekennzeichnet, dass** die innere Randfläche der Hauptdurchbohrung (31 a, 3a) einer Weiterverarbeitung unterworfen wird, um eine Oberflächen-Rauigkeit zu erhöhen.

6. Dichtungsvorrichtung (25A, 25B, 125) nach Anspruch 5, **dadurch gekennzeichnet, dass** die Dicke des dünnen Zusatzrings (32, 127) in einem Bereich zwischen 1/32 und 1/4 der Dicke des Hauptrings (31, 3) liegt.

7. Dichtungsvorrichtung (25A, 25B, 125) nach Anspruch 6, **dadurch gekennzeichnet, dass** der Hauptring (31, 3) aus einem steifen Material hergestellt ist, und dass der dünne Zusatzring (32, 127) aus einem deformierbaren Material hergestellt ist.

8. Dichtungsvorrichtung (25A, 25B, 125) nach Anspruch 7, **dadurch gekennzeichnet, dass** das steife Material eines von Edelstahl, Gusseisen und Gussbronze ist, und
   wobei das deformierbare Material eines von Harz, Hartgummi, Leichtmetall und Leder ist.

9. Dichtungsvorrichtung (25A, 258, 125) nach Anspruch 7, **dadurch gekennzeichnet, dass** die Fluidmaschine (1) eine Kreiselpumpe (1) ist, welche das Gehäuse (2) umfasst, in welchem ein Diffusorabschnitt (4A, 4B) geformt ist, und ein Laufrad (5A, 5B), welches in dem Diffusorabschnitt (4A, 4B) angeordnet ist,
dass der Rotor (19, 15) ein Winkelringabschnitt (19) des Laufrads (5A, 5B) ist,
dass der Hochdruckbereich (4b, 126a) ein Bereich des Diffusorabschnitts (4A, 4B) ist, in welchem ein Einlass (21) des Laufrads (5A, 5B) angeordnet ist, wobei der Niederdruckbereich (4a, 128b) ein anderer Bereich des Diffusorabschnitts (4A, 4B) ist, in welchem ein Auslass (22) des Laufrads (5A, 5B) angeordnet ist, und wobei der Hochdruckbereich (4b, 126a) und der Niederdruckbereich (4a, 126b) durch den Winkelringabschnitt (19) und einen Abschnitt des Gehäuses (2), der dem Winkelring gegenüber liegt, voneinander getrennt sind,
dass der Hauptring (31, 3) ein Spaltring ist, mit einem äußeren Umfang, der an dem Abschnitt des Gehäuses (2) befestigt ist, der dem Winkelring gegenüber liegt, und der mit dem ersten Spalt (35, 134) gegenüber einer äußeren Randfläche des Winkelrings angeordnet ist, und
dass der dünne Zusatzring (32) mit dem zweiten Spalt (36, 135) gegenüber der äußeren Randfläche des Winkelrings angeordnet ist.

**10.** Dichtungsvorrichtung (25A, 25B, 125) nach Anspruch 7, **dadurch gekennzeichnet, dass** die Fluidmaschine (1) eine mehrstufige Kreiselpumpe (1) ist, welche das Gehäuse (2) umfasst, in welchem primäre und sekundäre Diffusorabschnitte (4A, 4B) gebildet sind, und wobei primäre und sekundäre Laufräder (5A, 5B) in den jeweiligen primären und sekundären Diffusorabschnitten (4A, 4B) angeordnet sind,
dass der Rotor (19, 15) durch Nabenabschnitte (15) der primären und sekundären Laufräder (5A, 5B) gebildet wird,
dass der Hochdruckbereich (4b, 126a) ein Bereich des sekundären Diffusorabschnitts (4A, 4B) ist, der eine Auslassseite des sekundären Laufrads (5A, 5B) und eine hintere Oberflächenseite einer Hauptplatte (16) des sekundären Laufrads (5A, 5B) besetzt, wobei der Niederdruckbereich (4a, 126b) ein Bereich des primären Diffusorabschnitts (4A, 4B) ist, der eine Auslassseite des primären Laufrads (5A, 5B) und eine hintere Oberflächenseite einer Hauptplatte (16) des primären Laufrads (5A, 5B) besetzt, und wobei Hochdruckbereich (4b, 126a) und Niederdruckbereich (4a, 126b) durch einen Trennwandabschnitt (2a) des Gehäuses (2) voneinander getrennt sind, der zwischen den primären und sekundären Diffusorabschnitten (4A, 4B) und den Nabenabschnitten (15) angeordnet ist,
dass der Hauptring (31, 3) eine Buchse (3) ist, mit einem äußeren Umfang, der an der Trennwand befestigt ist, und die mit dem ersten Spalt (35, 134) gegenüber einer äußeren Randfläche der Nabenabschnitte (15) angeordnet ist, und
dass der dünne Zusatzring (32, 127) mit dem zweiten Spalt (36, 135) gegenüber der äußeren Randfläche der Nabenabschnitte (15) angeordnet ist.

## Revendications

**1.** Dispositif d'étanchéité (25A, 25B, 125) pour une machine à fluide (1) pour empêcher toute fuite d'un fluide d'une zone de haute pression (4b, 126a) vers une zone de basse pression (4b, 126b) dans un carter (2) de la machine à fluide à travers un espace (35, 36 ; 134, 135) entre le carter et un rotor (19, 15) logé dans le carter, **caractérisé en ce que** le dispositif d'étanchéité comprend :

un anneau principal (31, 3) ayant une structure d'une seule pièce, fixé sur une partie du carter correspondant à une frontière entre la zone de haute pression et la zone de basse pression, étant formé à l'intérieur de celui-ci avec un alésage traversant principal (31a, 3a) qui s'étend entre la zone de haute pression et la zone de basse pression et dans lequel le rotor est inséré de manière à définir un premier espace (35, 134) entre une paroi périphérique intérieure de l'alésage traversant principal et une surface périphérique extérieure du rotor ; et

un anneau auxiliaire mince (32, 127) ayant une partie circonférentielle extérieure logée dans une gorge annulaire de réception(31b, 129) formée à une partie de la paroi périphérique intérieure de l'alésage traversant principal sur un côté de zone de haute pression, étant formé à l'intérieur de celle-ci avec un alésage traversant auxiliaire (32a, 127a) d'un diamètre extérieur plus petit que celui de l'alésage traversant principal qui s'étend entre la zone de haute pression et la zone de basse pression et dans lequel le rotor est inséré de manière à définir un deuxième espace (36, 135), plus étroit que le premier espace, entre une paroi périphérique intérieure de l'alésage traversant auxiliaire et la surface périphérique extérieure du rotor, dans lequel une ouverture de l'alésage traversant principal dans une surface d'extrémité de l'anneau principal sur un côté de la zone de haute pression a un diamètre ($D_{m3}$) plus grand que les diamètres des autres parties de l'alésage traversant principal.

**2.** Dispositif d'étanchéité selon la revendication 1, **caractérisé en ce qu'**un troisième espace (37, 133) est défini entre une paroi inférieure de la gorge annulaire de réception et la circonférence extérieure de l'anneau auxiliaire mince, et **en ce qu'**une somme des tailles des deuxième et troisième espaces est inférieure à une taille du premier espace.

3. Dispositif d'étanchéité selon la revendication 2, **caractérisé en ce qu'**une distance (t1) entre une paire de parois latérales de la gorge annulaire de réception est supérieure à une épaisseur (t2) de l'anneau auxiliaire mince.

4. Dispositif d'étanchéité selon la revendication 3, **caractérisé en ce que** la paroi d'alésage intérieure de l'alésage traversant principal est pourvue d'une partie élargie (31c) à une partie faisant face à une surface de l'anneau auxiliaire mince du côté de zone de basse pression, la partie élargie ayant un diamètre croissant depuis le côté de la zone de basse pression vers le côté de la zone de haute pression.

5. Dispositif d'étanchéité selon la revendication 4, **caractérisé en ce que** la paroi périphérique intérieure de l'alésage traversant principal est soumise à un traitement pour accroître la rugosité de surface.

6. Dispositif d'étanchéité selon la revendication 5, **caractérisé en ce que** l'épaisseur de l'anneau auxiliaire mince est réglée dans une plage comprise entre 1/32 et 1/4 d'une épaisseur de l'anneau principal.

7. Dispositif d'étanchéité selon la revendication 6, **caractérisé en ce que** l'anneau principal est constitué d'un matériau rigide et l'anneau auxiliaire mince est constitué d'un matériau déformable.

8. Dispositif d'étanchéité selon la revendication 7, **caractérisé en ce que** le matériau rigide est l'un quelconque d'un acier inoxydable, de fonte, et de bronze coulé, et

   dans lequel le matériau déformable est l'un quelconque d'une résine, de caoutchouc dur, de métal léger et de cuir.

9. Dispositif d'étanchéité selon la revendication 7, **caractérisé en ce que** la machine à fluide est une pompe centrifuge (1) comprenant le carter à l'intérieur duquel une section à volutes (4A, 4B) est formée et une turbine (5A, 5B) est logée dans la section à volutes,

   **en ce que** le rotor est une partie d'anneau à bouche (19) de la turbine,

   **en ce que** la zone de haute pression est une zone de la section à volutes dans laquelle une entrée (21) de la turbine est située, la zone de basse pression est une autre zone de la section à volutes dans laquelle est située une sortie (22) de la turbine, et la zone de haute pression et la zone de basse pression sont séparées l'une de l'autre par la partie d'anneau de bouche et une partie du carter opposée à l'anneau de bouche,

   **en ce que** l'anneau principal est un anneau d'usure ayant une circonférence extérieure fixée sur la partie du carter opposée à l'anneau de bouche et étant opposé à une surface périphérique extérieure de l'anneau de bouche avec le premier espace, et

   **en ce que** l'anneau auxiliaire mince (32) est opposé à la surface périphérique extérieure de l'anneau de bouche avec le deuxième espace.

10. Dispositif d'étanchéité selon la revendication 7, **caractérisé en ce que** la machine à fluide est une pompe centrifuge à plusieurs étages comprenant le carter à l'intérieur duquel des sections de volutes de premier étage et de deuxième étage (4A, 4B) sont formées et des turbines de premier étage et de deuxième étage (5A, 5B) sont respectivement logées dans les sections de volutes de premier étage et de deuxième étage,

    **en ce que** le rotor est constitué de parties de mamelons (15) des turbines de premier étage et de deuxième étage,

    **en ce que** la zone de haute pression est une zone de la section de volutes de deuxième étage occupant un côté de sortie (21) de la turbine de deuxième étage et un côté de surface arrière d'une plaque principale (16) de la turbine de deuxième étage, la zone de basse pression est une zone de la section de volutes de premier étage occupant un côté de sortie (21) de la turbine de premier étage et un côté de surface arrière d'une plaque principale (16) de la turbine de premier étage, et la zone de haute pression et la zone de basse pression sont cloisonnées entre elles par une partie de cloison (2a) du carter entre les sections de volutes de premier étage et de deuxième étage et les parties de mamelons,

    **en ce que** l'anneau principal est une bague (3) ayant une circonférence extérieure fixée sur la cloison et étant opposée à une surface périphérique extérieure des parties de mamelons avec le premier espace, et

    **en ce que** l'anneau auxiliaire mince est opposé à la surface périphérique extérieure des parties de mamelons avec le deuxième espace.

*Fig.1*

# Fig.2

*Fig.3*

## Fig.4A

38
38a
38b

## Fig.4B

38
38a
38b

*Fig.5*

*Fig.6*

*Fig.7*

*Fig.8*

# Fig.9

## Fig.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6018694 A

- WO 9321464 A